# EUROPEAN PATENT APPLICATION

(11) **EP 0 646 811 A2**
(43) Date of publication of application: **05.04.1995**
(21) Application number: 94307080.5
(22) Date of filing: 28.09.1994
(51) Int. Cl.: G02B 6/00, G02B 6/44, H02G 15/013

(54) **Breakout for optical fibres**

(30) Priority: 01.10.1993 GB 9320262
(71) Applicant: BICC Public Limited Company, London W1X 5FH (GB)
(72) Inventor: Knott, Michael Paul, Urmston, Manchester (GB)
(74) Representative: Dlugosz, Anthony Charles

(57) **Abstract**

A breakout for a tube that is intended to carry optical fibres, comprises a body (1) having a channel (4) that extends along the body from one end to another end thereof and which furcates in a central region (5) thereof so that the channel has one outlet (6) at one end of the body and a plurality of outlets (7,7') at the other end. The breakout is capable of being stacked on one or more other breakouts and including one or more devices to enable it to be secured to such other breakout or breakouts. The breakout may be employed in optical fibre telephony systems where, for example, optical fibre bundles located in tubes need to be divided into smaller bundles as they are led into telephony racks.

## Description

This invention relates to optical fibre data transmission systems, and especially to components for use in optical fibre telephony systems.

In such systems there are many points at which the optical fibres need to be spliced, for example in external nodes of the system, in telephony racks in the exchange or at the subscribers' premises, and at these points assemblies of splice trays are typically employed in which a small number of splices are located in each tray. In one system that is proposed, fibre bundles are located on either side of the splice assembly in tubes, and the bundles need to be divided into smaller bundles appropriate for the number of splices in each tray. In view of the large number of fibres associated with the splice assembly, it is important that they be managed neatly and efficiently.

According to the present invention there is provided a breakout for a tube that is intended to carry optical fibres, which comprises a body having a channel that extends along the body from one end to another end thereof and which furcates in a central region thereof so that the channel has one outlet at one end of the body and a plurality of outlets at the other end of the body, the breakout being capable of being stacked on one or more other breakouts and including one or more devices to enable it to be secured to such other breakout or breakouts.

The breakouts according to the invention can conveniently be employed for conveying fibres to and from splice assemblies and can be stacked so that a large number of fibres can be handled in a relatively small space.

Preferably, the central region of the channel is accessible from a surface of the body in order to facilitate laying up of the fibres exiting from the tube at one end of the body into the correct tubes at the other end. In this case the body may be provided with a cover to enclose the central region and protect that length of the fibres not located in the tubes after the laying up operation has been completed.

Three forms of breakout according to the invention will now be described by way of example with reference to the accompanying drawings in which:
- Figures 1a to 1c: are perspective views of a one-in-two-out breakout shown from various directions;
- Figures 2a to 2c: are perspective views of a one-in-four-out breakout shown from various directions; and
- Figures 3a to 3c: are perspective views of a second form of one-in-two-out breakout shown from various directions.

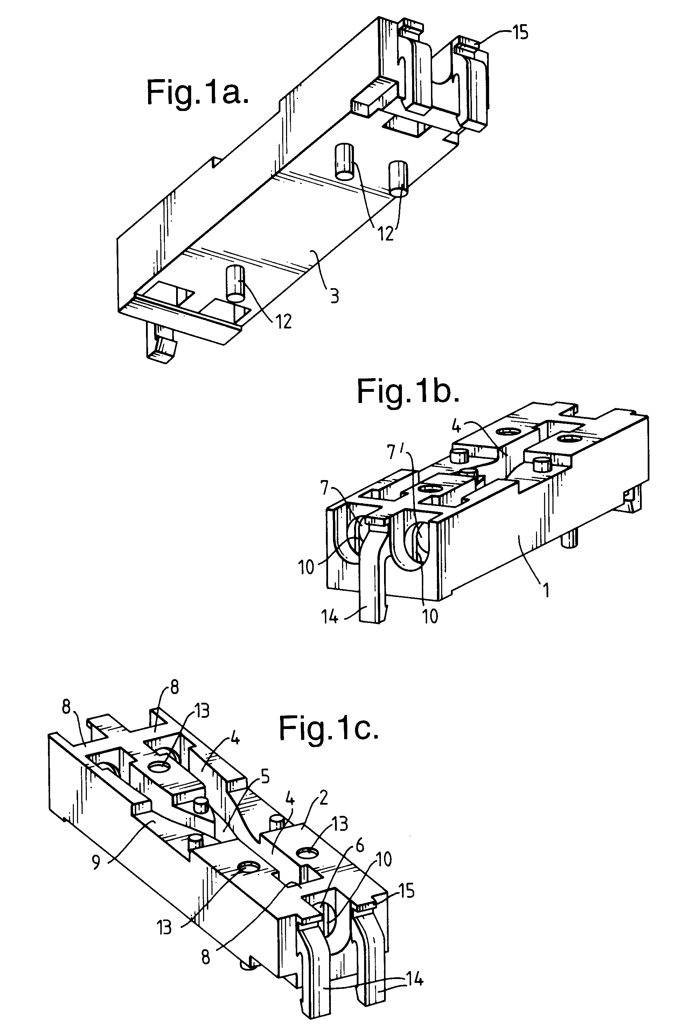

Referring to the accompanying drawings, figures 1a to c shown a one-in-two-out breakout according to the invention. The breakout has a generally rectangular injection moulded plastics body 1 having an upper surface 2 and a lower surface 3. A channel 4 extends along the length of the body from one end thereof to the other, the channel bifurcating in a central region 5 thereof so that the channel has only a single outlet 6 at one end of the body and a pair of outlets 7 and 7' at the other end. At each end region of the body a bridge 8 of plastics material causes the outlets to have a generally circular configuration, while along the rest of the length of the channel it is open along the top surface of the body. It is possible for the entire channel to be open along the top of the body if desired. In the central region of the channel the top surface 2 of the body has an indented portion 9 on which are provided three location lugs 10 so that a transparent plastics cover (not shown) provided with corresponding recesses or holes may be detachably secured to the body, the top surface of the plastics cover being generally flush with the remaining parts of the top surface 2 of the body when it is in position. At each channel outlet 6, 7 and 7', a small generally "C"-shaped ridge or knife-edge 10 is provided on the internal surfaces of the channel and under surface of the bridges 8 in order to retain an optical fibre tube against a pull-out force.

The lower surface 3 of the body is provided with three location lugs 12 and the upper surface is provided with three corresponding location recesses 13 to enable a number of breakouts to be stacked together with the location lugs of one received in the location recesses of another. In addition, resiliently deformable retaining clips 14 are provided at each end of the body for detachably retaining breakouts together when they are stacked. When stacked, the retaining clips 14 of the uppermost of a pair of stacked breakouts fits over a corresponding lug 15 of the lower breakout and positively locks the two together. The clips 14 can easily be detached from the lugs 15 by prising them off by means of a suitable tool such as a screwdriver inserted between the clip 14 and body 1.

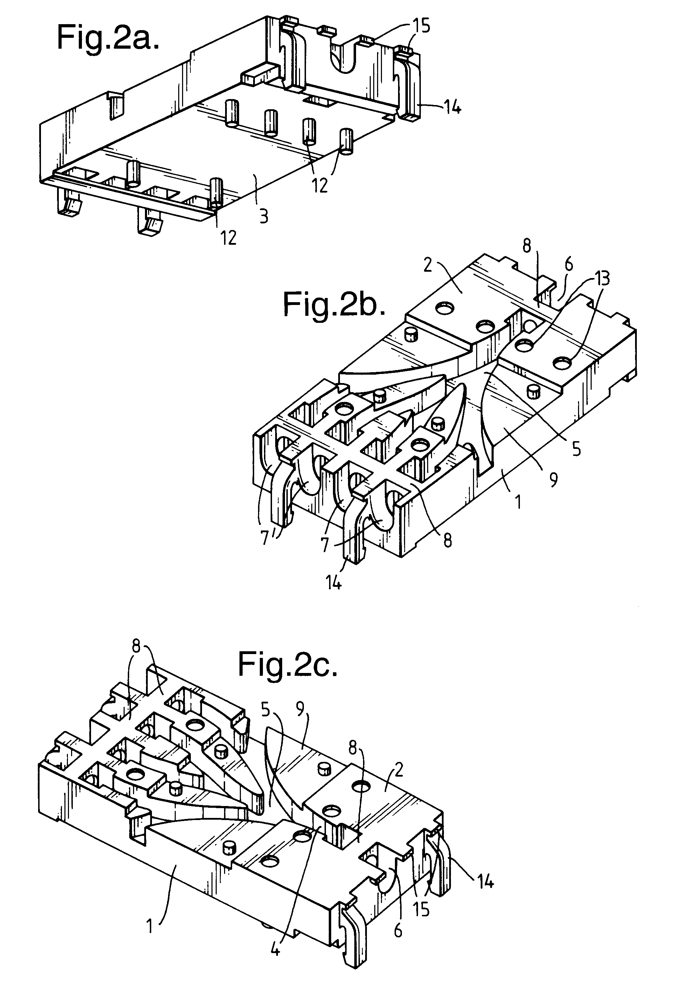

Figures 2a to c show a similar breakout to that shown in figures 1a to c, but in this case a one-in-four-out breakout. The construction and operation of this breakout is exactly the same as that shown in figures 1a to c with the exception that it enables cable fibre bundles to be divided into four. The breakout body has twice the width of the one-in-two-out breakout and has a disposition of location lugs and recesses that enables not only one-in-four-out breakouts to be stacked but also a pair of one-in-two-out breakouts positioned side by side to be stacked on a one-in-four-out breakout and vice versa. Although the body is provided with two retaining clips 14 at each end, one end of the body has four retaining lugs 15 in order to engage the four retaining clips 14 that would be present if a pair of one-in-two-out breakouts side by side were stacked on the one-in-four-out breakout.

If necessary bend limiting profiles may be provided on the tubes in order to maintain a defined minimum bend radius of the tubes.

In order to install the fibre, appropriate lengths of tubing are cut and are circumferentially scored about 5mm from their ends and the ends are inserted into the outlets so that the ridges 10 of the body engage the scores and prevent the tubes being pulled out. An optical fibre bundle is then pushed through one of the tubes, positioned in the channel of the breakout and the appropriate fibres are then inserted into the tubes attached to the other end of the breakout leading to the splice assembly. When the fibre is correctly routed the transparent plastics cover is snapped into place on the indented portion 9 of the upper surface and the breakout is then positioned and secured on to a mounting p[late of the splice assembly or on to another breakout that has previously been secured thereon.

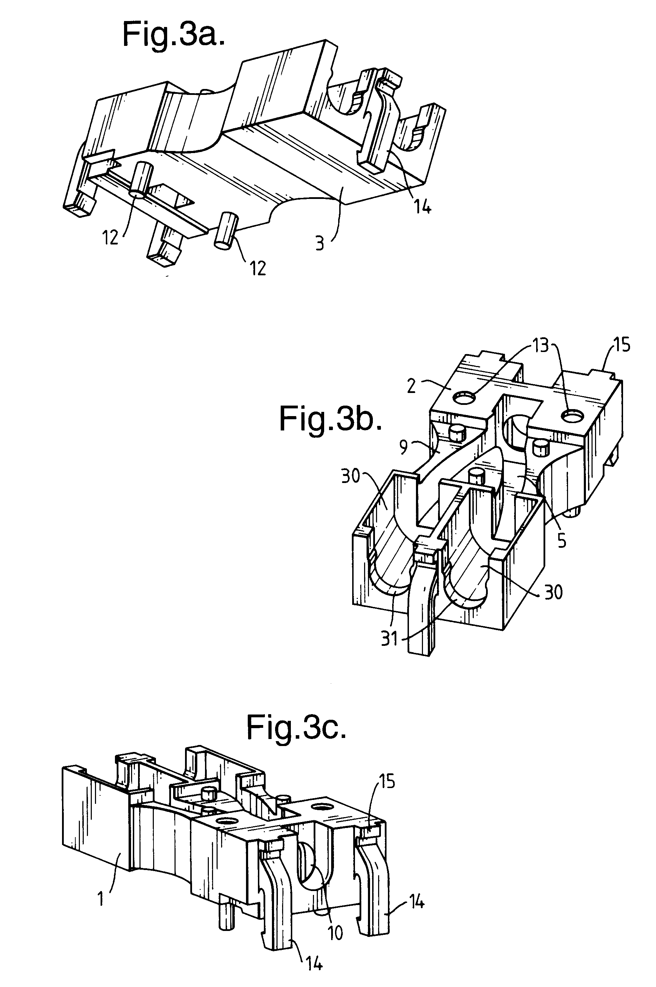

Figures 3a to 3c show another form of breakout, in this case more appropriately described as a two-in-one-out breakout for combining a pair of single fibres into one fibre tube. The construction of the breakout is substantially as described above with reference to the other figures with the exception that the two outlets that are on the same end of the breakout each have a cavity 30 and a snap-fit edge 31 for receiving an aramid anchor. The aramid anchor is a small crimp device for terminating the sheath and aramid strength fibres of an aramid strengthened buffered single fibre cable.

## Claims

1. A breakout for a tube that is intended to carry optical fibres, which comprises a body having a channel that extends along the body from one end to another end thereof and which furcates in a central region thereof so that the channel has one outlet at one end of the body and a plurality of outlets at the other end of the body, the breakout being capable of being stacked on one or more other breakouts and including one or more devices to enable it to be secured to such other breakout or breakouts.

2. A breakout as claimed in claim 1, wherein at least the central region of the channel is accessible from a surface of the body.

3. A breakout as claimed in claim 2, which includes a cover that can be secured to the body to enclose the central region of the channel.

4. A breakout as claimed in claim 3, wherein the cover is transparent.

5. A breakout as claimed in any one of claims 1 to 4, wherein the body includes one or more pins and corresponding recesses to enable correct alignment with the other breakout or breakouts.

6. A breakout as claimed in any one of claims 1 to 5, wherein the channel furcates into two outlets.

7. A breakout as claimed in any one of claims 1 to 5, wherein the channel furcates into four outlets.

8. A breakout as claimed in any one of claims 1 to 7, wherein each outlet of the channel has means for resisting a tube inserted therein being pulled out.
